# EUROPÄISCHE PATENTSCHRIFT

(11) **EP 2 850 928 B1**
(45) Veröffentlichungstag und Bekanntmachung des Hinweises auf die Patenterteilung: **20.12.2017**
(21) Anmeldenummer: 14185504.9
(22) Anmeldetag: 19.09.2014
(51) Int. Cl.: A01C 23/00

(54) **Verteilereinrichtung für feststoffhaltige Flüssigkeiten**
Distribution device for liquids containing solids
Dispositif de répartition pour liquides contenant des matières solides

(30) Priorität: 19.09.2013 DE 202013008267 U
(43) Veröffentlichungstag der Anmeldung: 25.03.2015
(73) Patentinhaber: Hugo Vogelsang Maschinenbau GmbH, 49632 Essen (DE)
(72) Erfinder: Krampe, Paul, 49632 Essen/Olbg. (DE); Hertwig, Martin, 49632 Essen/Olbg. (DE)
(74) Vertreter: Eisenführ Speiser

(56) Entgegenhaltungen:
- EP-A1- 1 656 822
- EP-A2- 1 915 895
- DE-U1-202011 050 654

## Beschreibung

Die Erfindung betrifft eine Verteilereinrichtung für Flüssigkeiten, insbesondere für feststoffhaltige Flüssigkeiten, umfassend: eine Verteilerkammer mit einer Eihlassöffnung, die in einen Kammerinnenraum der Verteilerkammer mündet, eine erste Lochmesserscheibe mit mehreren Auslassöffnungen, welche den Kammerinnenraum mit mehreren Anschlussstutzen verbinden und eine Messerantriebswelle, die drehbar um eine Antriebswellenachse gelagert ist, Eine solche Verteilereinrichtung ist aus der EP 1656 822 A1 bekannt.

Verteilereinrichtungen für feststoffhaltige Flüssigkeiten werden in verschiedenen Anwendungen eingesetzt, ein typisches Beispiel ist die Anwendung in der Landwirtschaftstechnik, beispielsweise zur Ausbringung von Gülle. Hierbei liegt die Aufgabe der Verteilereinrichtung darin, die feststoffbeladene Flüssigkeit aus einem Tank auf mehrere Öffnungen zu verteilen, beispielsweise um diese räumlich gezielt und in der Austragsrate gut dosiert über mehrere Öffnungen auszubringen. Ein typischer Anwendungsfall ist das Ausbringen von Gülle über eine Schleppschlauchvorrichtung, bei dem die Gülle aus dem Gülletank auf mehrere, beispielsweise 5 bis 100 Schläuche verteilt wird, um eine räumlich gezielte und gut dosierte Ausbringung zu erreichen.

Ein grundsätzliches Problem, das bei solchen Verteilereinheiten auftritt, liegt in dem Umstand begründet, dass die feststoffbeladene Flüssigkeit systembedingt aus einer Zuleitung mit großem Querschnitt auf mehrere Zuleitungen mit jeweils kleinem Querschnitt verteilt werden muss. Aufgrund der Feststoffe in der Flüssigkeit tritt bei diesem systembedingten Prozess die Gefahr von Verstopfungen in den kleinen Querschnitten auf. Es ist grundsätzlich bekannt, Verteileinrichtungen für feststoffbeladene Flüssigkeiten mit einer Schneideinrichtung zu koppeln, um dieses Problem zu lösen. Durch eine solche Schneideinrichtung werden die Feststoffe in der Flüssigkeit zerkleinert, was die Gefahr von Verstopfungen in den kleinen Durchtrittsquerschnitten in bzw. hinter der Verteilereinrichtung verringert. So ist beispielsweise eine in die Verteileinrichtung integrierte Schneideinrichtung bekannt, welche Schneidmesser aufweist, die in Zusammenwirkung mit einer Lochscheibe eine Scherwirkung auf die Feststoffe ausüben, wenn diese durch die Löcher der Lochscheibe hindurchtreten. Hierbei wird das Schneidmesser relativ zu der Lochscheibe bewegt, um diese Scherwirkung zu erzeugen. Die Löcher in der Lochscheibe korrespondieren hierbei mit den Auslassöffnungen der Verteileinrichtung und stehen mit diesen Auslassöffnungen in Fluidverbindung.

Ein weiteres Problem, welches bei Verteileinrichtungen der eingangs genannten Art auftritt, liegt darin, dass die Verteileinrichtungen unter verschiedenen Lastbedingungen betrieben werden müssen, die durch die Nutzung aller Auslassöffnungen in einem Lastzustand und die Nutzung nur einiger der Auslassöffnungen, in dem die anderen Auslassöffnungen verschlossen werden, charakterisiert ist. Es ist wünschenswert, die Verteileinrichtungen auch bei solch unterschiedlichen Lastzuständen wirtschaftlich betreiben zu können und eine zuverlässige und gleichmäßige Verteilung der feststoffbeladenen Flüssigkeit mit wirksamer Zerkleinerung der Feststoffe zu erreichen.

Ein weiteres Problem bei der Verteilung von feststoffbeladenen Flüssigkeiten liegt in der großen Variabilität, die solche Flüssigkeiten hinsichtlich ihrer strömungsrelevanten Eigenschaften aufweisen. So können feststoffbeladene Flüssigkeiten einerseits durch einen niedrigen oder einen hohen Feststoffgehalt charakterisiert sein, der typischerweise als Feststoffvolumen pro Flüssigkeitsvolumen oder Feststoffvolumen bezogen auf das Gesamtvolumen charakterisiert wird. Zum anderen können feststoffbeladene Flüssigkeiten sich durch die Materialeigenschaften und geometrischen Eigenschaften der Feststoffanteile stark unterscheiden, beispielsweise können die Feststoffanteile einen geringen oder einen hohen Widerstand gegen Scherkräfte aufweisen, eine kompakte, beispielsweise kugelige Geometrie oder eine längliche oder plattenförmige Geometrie nach Art von Fasern oder Blättern aufweisen und sich natürlich generell in ihren absoluten Abmessungen unterscheiden. Schließlich kann auch die Flüssigkeit, in der sich die Feststoffe befinden, unterschiedliche Viskositäten aufweisen. Aus diesen Gründen ist es bekannt, Verteileinrichtungen für feststoffbeladene Flüssigkeiten in einer Vielzahl von Varianten bereitzustellen, beispielsweise mit kleinen oder größeren Austrittsöffnungen, ein, zwei, drei oder mehr Schneidmessern, Lochscheibenmessern mit unterschiedlichen Geometrien und Anzahlen von Löchern sowie unterschiedlichen Relativgeschwindigkeiten zwischen den Schneidelementen und der Lochscheibe. Zwar kann durch diese Anpassung der geometrischen, materialtechnischen und betriebspunktbezogenen Parameter einer Verteileinrichtung eine häufig ausreichend gute Anpassung an bestimmte Eigenschaften der feststoffbeladenen Flüssigkeit erreicht werden und folglich eine gute Verteilung einer feststoffbeladenen Flüssigkeit erzielt werden. Nachteilig an dieser Konstruktionsweise vorbekannter Verteileinrichtungen ist jedoch, dass auf Änderungen der Eigenschaften der feststoffbeladenen Flüssigkeit nur begrenzt durch Änderungen der Betriebsparameter, beispielsweise der Relativgeschwindigkeit zwischen Schneidmesser und Lochscheibe, reagiert werden kann und häufig ein Austausch mechanischer Komponenten der Verteileinrichtung notwendig ist, wenn die Verteileinrichtung von der Verteilung einer feststoffbeladenen Flüssigkeit auf die Verteilung einer feststoffbeladenen Flüssigkeit mit unterschiedlichen Eigenschaften umgestellt werden soll. Es ist wünschenswerte hier eine bessere Anpassungsmöglichkeit solcher Verteileinrichtungen auch für unterschiedliche feststoffbeladene Flüssigkeiten mit geringerem Aufwand für den Benutzer bereitzustellen.

Bei Anwendungen, in denen Verteilereinrichtungen zum Ausbringen von Flüssigkeit aus einem fahrenden Fahrzeug eingesetzt werden, kann das weitere Problem auftreten, dass der Volumenstrom aufgrund unterschiedlicher Fahrgeschwindigkeiten und gewünschten Ausbringmengen (m³/ha) stark schwankt oder variiert werden soll. Es besteht daher ein Bedarf für Verteilereinrichtungen, die hinsichtlich der Fördermenge in einem großen Bereich variabel betrieben werden können, ohne hierbei die Zerkleinerungswirkung zu reduzieren.

Erfindungsgemäß werden diese Probleme durch eine Verteilereinrichtung mit den Merkmalen des Anspruchs 1 gelöst. Durch eine Verteilereinrichtung der eingangs beschriebenen Bauweise, welche sich auszeichnet durch ein erstes Exzenterelement, welches mit der Messerantriebswelle verbunden ist und eine beabstandet zur Antriebswellenachse liegende erste Exzenterachse definiert, und ein erstes Schneidmesser, welches mit dem ersten Exzenterelement verbunden ist und eine Schneidkante aufweist, welche an der ersten Lochmesserscheibe anliegt und mittels des ersten Exzenterelements relativ zu der ersten Lochmesserscheibe bewegbar ist.

Erfindungsgemäß wird das Schneidmesser relativ zu der Lochmesserscheibe mittels eines Exzenterelements bewegt. Hierdurch wird eine exzentrische Bewegung des Schneidmessers entlang der Lochmesserscheibe bewirkt. Es ist besonders bevorzugt, dass sich das Schneidmesser mit der Schneidkante überlagert zu der Bewegung des Exzenterelementes aktiv angetrieben oder passiv um die Exzenterachse dreht beziehungsweise drehen lässt. Bei dieser Konfiguration wird eine Rotationsbewegung des Schneidmessers um die Exzenterachse überlagert mit einer Rotationsbewegung der Exzenterachse um die Messerantriebswelle. Das Schneidmesser bewegt sich hierbei auf einer Bewegungsbahn, die besonders tolerant gegenüber unterschiedlichen Viskoseeigenschaften der feststoffbeladenen Flüssigkeit und unterschiedlichen Eigenschaften der Feststoffe in dieser Flüssigkeit ist und einen breiten Parameterbereich solcher feststöffbeladener Flüssigkeiten abdeckt, ohne dass hierzu konstruktive Änderungen am Schneidmesser oder der Lochmesserscheibe erforderlich wären. Insbesondere ist es bevorzugt, wenn das Schneidmesser drehbar an dem Exzenterelement gelagert ist und hierdurch eine passive Drehbewegung gegenüber dem Exzenterelement ausführen kann. Das Schneidmesser kann infolge dieser passiven Bewegungsmöglichkeit relativ zum Exzenterelement punktuellen Belastungen durch Feststoffe in der Flüssigkeit besser ausweichen, besonders widerstandsfähige Feststoffe mit einem günstigeren Hebel schneiden und den Verschleiß entlang des Schneidmessers gleichmäßiger verteilen als bei Schneidmessern, die um eine einzige Achse rotieren. Die Messerantriebswelle ist vorzugweise im Kammerinnenraum angeordnet und kann sich durch die Löchmesserscheibe erstrecken, um in der Lochmesserscheibe oder außerhalb der Verteilerkammer drehbar gelagert zu sein.

Die Flüssigkeit wird durch die Einlassöffnung in den Kammerinnenraum der Verteilerkammer mit Feststoffen beladen eingeführt. Aus dem Kammerinnenraum gelangt die feststoffbeladene Flüssigkeit durch die Auslassöffnungen in der Lochmesserscheibe hindurch zu Kammerauslassöffnungen. Die Anzahl dieser Kammerauslassöffnungen kann mit der Anzahl der Auslassöffnungen in der Lochmesserscheibe übereinstimmen oder verschieden hiervon sein. Beim Durchtritt durch die Auslassöffnungen in der Lochmesserscheibe werden die Feststoffe durch eine Scherwirkung klein geschnitten, die mittels einer Relativbewegung der Schneidkante zu der Lochmesserscheibe erzeugt wird. Das Schneidmesser kann hierbei bevorzugt auf der zum Kammerinnenraum weisenden Seite der Lochmesserscheibe angeordnet sein oder auf der vom kammerinnenraumwegweisenden Seite der Lochmesserscheibe. Das Schneidmesser kann durch ein einziges Schneidelement ausgebildet sein, das eine, zwei oder mehr Schneidkanten aufweist, die mit den Schneidkanten an den Auslassöffnungen in der Lochesserscheibe zusammen wirken. Ebenso kann das Schneidmesser durch zwei oder mehr Schneidelemente bereitgestellt werden, die ihrerseits eine, zwei oder mehr Schneidkanten aufweisen.

Gemäß einer ersten bevorzugten Ausführungsform kann die erfindungsgemäße Verteilereinrichtung fortgebildet werden durch ein Kupplungselement, welches das Exzenterelement mit der Messerantriebswelle verbindet und welches in einer ersten Rastposition an dem Exzenterelement das Exzenterelement in einer ersten Exzentrizität der ersten Exzenterachse zu der Antriebswellenachse positioniert und in einer zweiten Rastposition an dem Exzenterelement das Exzenterelement in einer zweiten Exzentrizität der ersten Exzenterachse, die größer als die erste Exzentrizität ist, zu der Antriebswellenachse positioniert. Bei dieser Ausführungsform kann die Exzentrizität der Exzenterachse, zu der Antriebswellenachse im laufenden Betrieb der Verteilereinrichtung geändert werden. Hierzu ist ein Kupplungselement zwischen dem Exzenterelement und der Messerantriebswelle bereitgestellt, welches in zwei Rastpositionen die Messerantriebswelle mit dem Exzenterelement mechanisch koppelt. Dabei wird in der ersten Rastposition eine unterschiedliche Exzentrizität der zweiten Rastposition erreicht. Unter der Exzentrizität ist hierbei der Abstand zwischen der Exzenterachse und der Antriebswellenachse zu verstehen. Bei dieser bevorzugten Ausführungsform kann die Verteilereinrichtung mit zwei unterschiedlichen Exzentrizitäten betrieben werden, wobei die Umschaltung zwischen der ersten und zweiten Exzentrizität beziehungsweise ersten und zweiten Rastposition durch manuelle Betätigung erfolgen kann oder durch Überschreiten bestimmter Betriebsparameterschwellen, wie beispielsweise bestimmter Drehzahlen oder Drehmomente. So kann das Exzenterelement in der ersten Rastposition an dem Kupplungselement einrasten und bei Unterschreiten oder Überschreiten einer vorbestimmten Drehzahlgrenze der Messerantriebswelle oder des Schneidmessers in die zweite Rastposition sich bewegen, beispielsweise durch Fliehkrafteinflüsse oder Schleppmomente. Ebenso kann eine Umschaltung zwischen der ersten und der zweiten Rastposition durch eine manuelle, äußere Betätigung eines Umschalthebels oder sonstigen Bestätigungselements erfolgen.

Grundsätzlich ist zu verstehen, dass bei dieser Ausführungsform das Exzenterelement binär entweder in der ersten oder der zweiten Rastposition zum Kupplungselement positioniert ist. In einer alternativen Ausführungsform kann das Exzenterelement aber auch in Positionen, die zwischen diesen beiden Rastpositionen liegen, zum Kupplungselement beziehungsweise zur Antriebswellenachse positioniert sein, so dass eine analoge, stufenlose Änderung der Exzentrizität realisiert wird.

Gemäß einer dabei besonders bevorzugten Ausführungsform ist vorgesehen, dass das Kupplungselement mittels einer Drehrichtungsümkehr der Messerantriebswelle zwischen der ersten und zweiten Rastposition hin- und her bewegt wird. Diese Fortbildungsform ermöglicht eine funktionell in vielen Anwendungsformen leicht realisierbare Umschaltbarkeit zwischen der ersten und der zweiten Rästposition beziehungsweise Exzentrizität, indem die Drehrichtung der Messerantriebswelle umgeschaltet wird. Demzufolge wird die erste Exzentrizität beispielsweise bei Rotation der Messerantriebswelle im Uhrzeigersinn eingestellt, wohingegen die zweite Rastposition bei Rotation der Messerantriebswelle entgegen dem Uhrzeigersinn eingestellt wird. Insbesondere kann diese Ausgestaltung bevorzugt zusammen wirken mit Schneidmessern, die entsprechende Schneidkanten aufweisen, die je nach Rotationsrichtung im Eingriff mit den an der Lochmesserscheibe ausgebildeten Schneidkanten sind oder keine solche Schneidwirkung entfalten, wodurch eine gleichmäßigere Verteilung der Verschleißwirkung auf das Schneidmesser erzielt wird.

Noch weiter ist es bevorzugt, wenn das Kupplungselement formschlüssig in eine Ausnehmung des ersten Exzenterelements eingreift. Durch eine formschlüssige Drehmomentübertragung zwischen Kupplungselement und Exzenterelement wird einerseits eine zuverlässige Rastposition und Kraftübertragung erzielt. Zugleich wird eine weitestgehend verschleißunabhängige Kraftübertragung mit einem hohen übertragbaren Drehmoment realisiert.

Gemäß einer weiteren bevorzugten Ausführungsform ist vorgesehen, dass das Kupplungselement eine Nocke umfasst, die in die Ausnehmung des ersten Exzenterelements eingreift und die Ausnehmung bei einer ersten Drehrichtung der Messerantriebswelle eine erste Rastposition für die Nocke bereitstellt und bei einer zur ersten Drehrichtung entgegengesetzten Drehrichtung der Messerantriebswelle eine zweite Rastposition bereitstellt. Grundsätzlich ist zu verstehen, dass das Kupplungselement eine Nocke umfassen kann oder aus einer Nocke bestehen kann. Diese Nocke greift formschlüssig in eine Ausnehmung des ersten Exzenterelements ein und kann sich in dieser Ausnehmung bewegen und so die erste und zweite Rastposition einnehmen. Diese Ausführungsform eignet sich insbesondere dafür, um eine Umschaltung zwischen der ersten und der zweiten Rastposition durch eine Drehrichtungsumkehr der Messerantriebswelle zu bewirken. Die Nocke kann hierbei eine Schwenkbewegung, eine Wälzbewegung oder eine translatorische geradlinige oder bogenförmige Bewegung ausführen oder kann sich auf einer Bewegungsbahn zwischen der ersten und zweiten Rastposition bewegen, die aus zwei oder mehr dieser Bewegungsformen zusammengesetzt ist. Für eine kompakte Bauweise ist es bevorzugt, dass das Kupplungselement die Nocke umfasst bzw. durch eine Nocke dargestellt wird und die Ausnehmung im bzw. am Exzenterelement ausgebildet ist. In anderen konstruktiven Ausgestaltungen kann aber eine inverse Konstruktion hierzu, bei der eine Ausnehmung im bzw. am Kupplungselement ausgebildet ist und diese mit einer Nocke zusammenwirkt, die am Exzenterelement ausgebildet oder mit diesen verbunden ist, bevorzugt sein.

Gemäß einer weiteren bevorzugten Ausführungsform ist vorgesehen, dass das Kupplungselement und die Antriebswelle integral ausgeführt sind. Bei dieser Ausgestaltung stellt das Kupplungselement zugleich die Antriebswelle dar, die bei dieser Ausgestaltung zumindest im Bereich der Exzenterelemente mit einem Nockenprofil ausgebildet sein kann, um die Zusammenwirkung mit den Ausnehmungen in den Exzenterelementen zu erzielen. Unter einer integralen Ausführung von Kupplungselement und Antriebswelle ist hierbei zu verstehen, dass die Antriebswelle und das Kupplungselement einstückig ausgeführt sind, insbesondere durch ein einziges Bauteil, welches gemeinschaftlich die Funktion der Antriebswelle und des Kupplungselements verwirklicht.

Gemäß einer weiteren bevorzugten Ausführungsform ist vorgesehen, dass eine zweite Lochmesserscheibe mit mehreren Auslassöffnungen den Innenraum der Verteilerkammer begrenzt und ein zweites Schneidmesser bereitgestellt ist, welches eine Schneidkante aufweist, die an der zweiten Lochmesserscheibe anliegt und relativ zu dieser beweglich ist. Bei dieser Ausgestaltung wird der Kammerinnenraum durch zwei Lochmesserscheiben begrenzt, die vorzugsweise gegenüberliegend angeordnet sind und den Kammerinnenraum zwischen sich einschließen. Durch diese Bauform kann die Anzahl der Abgänge aus der Verteilereinrichtung verdoppelt werden, weil zwei Seiten der Verteilereinrichtung dazu genutzt werden, um die feststoffbeladene Flüssigkeit auf die Auslassöffnung zu verteilen. So kann beispielsweise die Verteilerkammer zylinderförmig ausgebildet sein und die Lochmesserscheiben sind jeweils stirnseitig an der zylinderförmigen Verteilerkammer angeordnet. Bevorzugt ist es hierbei, wenn die erste und zweite Lochmesserscheibe baugleich ausgeführt sind und auch die Funktionsweise und konstruktive Ausgestaltung des ersten und zweiten Schneidmessers übereinstimmend ist.

Dabei ist es besonders bevorzugt, wenn das zweite Schneidmesser mit dem ersten Exzenterelement verbunden ist und die Schneidkante des zweiten Schneidmessers mittels des ersten Exzenterelements relativ zu der zweiten Lochmesserscheibe bewegbar ist. Bei dieser Ausführungsform erfolgt eine Bewegung sowohl des ersten als auch des zweiten Schneidmessers mittels des ersten Exzenterelements. Beide Schneidmesser bewegen sich daher winkelsynchron auf übereinstimmenden Bewegungsbahnen, solcher Art, dass das erste Schneidmesser an der ersten Lochmesserscheibe und das zweite Schneidmesser an der zweiten Lochmesserscheibe anliegt, sodass die Bewegungsbahnen parallel beabstandet zu einander verlaufen.

Noch weiter ist es bevorzugt, dass das erste und/oder das zweite Schneidmesser an dem ersten Exzenterelement drehbar um die erste Exzenterachse gelagert ist Bei dieser Ausgestaltung ist das erste bzw. zweite Schneidmesser mittels einer entsprechenden Drehlagerung an dem ersten Exzenterelement beweglich gelagert und kann sich folglich relativ zu dem Exzenterelement drehen. Diese Drehbewegung kann insbesondere passiv sein, d.h. das/ die Schneidmesser ist/sind nicht mit einem Antriebselement oder dergleichen gekoppelt, um eine Drehbewegung relativ zum Exzenterelement auszuführen. Stattdessen wird bei der passiven Drehbewegung das Schneidmesser durch Schneidkräfte und Reibungskräfte gegenüber dem Exzenterelement gedreht, das durch die Drehung der Messerantriebswelle, mit der das Exzenterelement verbunden ist, angetrieben wird. Insbesondere eignet sich diese Ausführungsform für ein ringförmiges Schneidmesser, bei dem die Schneidkanten an einem Ringelement und kreisförmig ausgebildet sind, das beispielsweise konzentrisch zur Exzenterachse des Exzenterelements liegen kann. Bei dieser Ausführungsform kann beispielsweise am Innenradius des ringförmigen Schneidelements und am Außenradius des ringförmigen Schneidelements eine entsprechende Schneidkante bereitgestellt sein, mit der die Schneidwirkung in Zusammenwirkung mit den Schneidkanten an den Öffnungen in der Lochmesserscheibe erzielt wird.

Erfindungsgemäß ist vorgesehen, dass ein Ausgleichsgewicht mit der Messerantriebswelle verbunden ist, dessen Massenschwerpunkt exzentrisch zu der Antriebswellenachse angeordnet ist, vorzugsweise um 180° versetzt zur ersten Exzenterwellenachse. Durch ein Ausgleichsgewicht kann die durch das erste Exzenterelement oder durch beide Exzenterelemente hervorgerufene Unwucht teilweise oder vollständig ausgeglichen werden, sodass ein Massenausgleich um die Messerantriebswelle erzielt wird. Dabei ist zu verstehen, dass das Ausgleichsgewicht in solcher Art mit der Messerantriebswelle verbunden sein kann, dass es unmittelbar mechanisch mit der Messerantriebswelle verbunden ist oder einstückig mit dieser ausgeführt ist oder indem das Ausgleichgewichtselement mit dem ersten Exzenterelement oder mit dem zweiten Exzenterelement mechanisch direkt verbunden ist oder integral mit diesen ausgeführt ist. Besonders bevorzugt ist es, die Masse des Ausgleichgewichtselementes und die Lage des Massenschwerpunktes des Ausgleichgewichtselementes solcher Art zu wählen, dass hierdurch ein vollständiger Massenausgleich gegenüber der Masse des ersten Exzenterelements und daran montierter exzentrisch liegender Bauteile bzw. des ersten und zweiten Exzenterelements und daran montierter exzentrisch bewegter Bauteile erzielt wird. Insbesondere ist es bevorzugt, wenn das Ausgleichgewichtselement lösbar oder verschieblich mit der Messerantriebswelle verbunden ist und hierdurch aus einem Sortiment von Ausgleichgewichtselementen mit unterschiedlichem Massenschwerpunkt in Bezug auf den Befestigungspunkt zur Messerantriebswelle oder unterschiedlicher Masse ausgewählt werden kann oder das Ausgleichsgewicht verschoben werden kann, um hierdurch unterschiedliche Massen oder unterschiedliche Exzentrizitäten des ersten/zweiten Exzenters und der daran montierten Schneidmesser zu kompensieren.

Noch weiter ist es bevorzugt, wenn die Einlassöffnung eine Einlassrichtung der feststoffhaltigen Flüssigkeit definiert, die parallel, vorzugsweise koaxial zur Antriebswellenachse liegt. Bei einer solchen Einströmrichtung wird die feststoffbeladenen Flüssigkeit parallel zur Antriebswellenachse in den Kammerinnenraum eingeführt und kann dadurch in besserem Maße gleichmäßig auf die Auslassöffnungen verteilt werden. Diese Ausführungsform eignet sich insbesondere gut für eine Anordnung der Einlassöffnung und der Auslassöffnungen in einer Stirnwand und gegebenenfalls weiterer Auslassöffnungen in einer hierzu gegenüberliegenden Stirnwand. Aufgrund einer hierbei möglichen, rotationssymmetrischen Anordnung der Einlassöffnung und der Auslassöffnungen wird eine weitestgehend gleichmäßige Druckbeaufschlagung aller Auslassöffnungen und übereinstimmende Strömungsweglängen zwischen der Einlassöffnung und jeder Auslassöffnung erzielt. Die Dosiergenauigkeit der Verteilereinrichtung kann hierdurch erhöht werden. In anderen Ausgestaltungen kann anstelle eine axialen Strömungsrichtung durch die Einlassöffnung auch eine radiale Strömungsrichtung durch die Einlassöffnung in Bezug auf die Antriebswellenachse realisiert werden, beispielsweise indem die Einlassöffnung in einem Gehäusewandabschnitt angeordnet wird, der als Umfangswandabschnitt um die Aritriebswellenachse ausgebildet ist.

Noch weiter ist es dabei bevorzugt, wenn im Kammerinnenraum eine Flüssigkeitsleiteinrichtung angeordnet ist, welche so geformt ist, dass die axial zuströmende Flüssigkeit daran nach radial auswärts umgelenkt wird. Durch eine Flüssigkeitsleiteinrichtung innerhalb der Verteilerkammer kann die Strömung der feststoffhaltigen Flüssigkeit von der Einlassöffnung zu den Auslassöffnungen in einer günstigen Weise geführt werden und hierdurch verhindert werden, dass Auslassöffnungen, die in Richtung des Zustroms durch die Einlassöffnungen liegen, in höherem Maße mit Flüssigkeit beaufschlagt werden als andere Auslassöffnungen. Zudem kann die Ablagerung von Feststoffen innerhalb der Verteilerkammer mit der Gefahr der Verstopfung von Teilen des Kammerinnenraums verringert oder vollständig vermieden werden. Die Flüssigkeitsleiteinrichtung kann beispielsweise nach Art eines Pralltellers mit zentraler, zur Einlassöffnung weisenden Erhebung ausgeführt sein, der in eine zylindrisch geformte Verteilerkammer eingesetzt ist und den eintretenden Flüssigkeitsstrom ausgehend von der zentralen Erhebung entlang eines gekrümmten Wandabschnitts nach radial auswärts umlenkt. Insbesondere ist es bevorzugt, wenn diese Flüssigkeitsleiteinrichtung zugleich die Verteilerkammer in einen flüssigkeitsleitenden Kammerinnenraum und einen trockenen Kammerinnenraum unterteilt. In diesem Fall kann in dem trockenen Kammerinnenraum eine Anordnung der mechanischen Bauteile erfolgen, die daher ohne nennenswerten Strömungswiderstand sich bewegen können und nicht der gegebenenfalls aggressiven Wirkung der feststoffhaltigen Flüssigkeit ausgesetzt sind.

Der solcherart nach radial auswärts umgelenkte Flüssigkeitsstrom können dann durch Umlenkung an der inneren Mantelfläche des zyloindrischen Rohres, das den Prallteler umgibt, wiederum axial ausgerichtete Flüssigkeitsströme erzeugt werden. Diese Umlenkung an der inneren Mantelfläche kann dabei so erfolgen, dass Flüssigkeitsströme in beiden einander entgegengesetzten axialen Richtungen erzeugt werden, sodass die Flüssigkeit auf Auslassöffnungen in beiden Stirnwänden der Verteilereinrichtung verteilt werden, insbesondere zu gleichen Teilen auf die beiden axialen Strömungsrichtungen verteilt wird..

Gemäß einer weiteren bevorzugten Ausführungsform wird die erfindungsgemäße Verteilereinrichtung fortgebildet durch einen der Einlassöffnung in den Kammerinnenraum in Strömungsrichtung vorgelagerten Strömungskanal und eine in diesem Strömungskanal angeordnete Düse mit einer Querschnittsverringerung, gefolgt von einer Querschnittserweiterung in Strömungsrichtung. Diese Fortbildungsform löst ein spezifisches Problem, das in einer Vielzahl von Einbausituationen von Verteilereinrichtungen auftritt, wenn die Platzverhältnisse beengt sind. Oftmals wird in solchen beengten Platzverhältnissen ein gekrümmter Rohrabschnitt an die Einlassöffnung angeschlossen und die feststoffhaltige Flüssigkeit wird über diesen gekrümmten Rohrabschnitt in die Einlassöffnung und den Kammerinnenraum eingeleitet. Diese Art der Strömungsführung hat zur Folge, dass die feststoffhaltige Flüssigkeit im Kammerinnenraum mit einer inhomogenen Strömung eintritt und dies eine gleichmäßige Dosierung der Flüssigkeit auf die Auslassöffnungen erschwert oder unmöglich macht. Durch eine Düse, die in Strömungsrichtung vor dem Eintritt der feststoffhaltigen Flüssigkeit in den Kammerinnenraum angeordnet ist, kann diese Problematik weitestgehend oder vollständig vermieden werden. Durch die Düse wird die feststoffhaltige Flüssigkeit zunächst im Bereich der Querschnittsverengung beschleunigt, dann im Bereich der stromabwärts von der Verengung liegenden Querschnittserweiterung wiederum verlangsamt und hierdurch hinsichtlich ihrer Strömungsrichtung homogenisiert.

Dabei ist es insbesondere bevorzugt, dass das zweite Schneidmesser mit einem zweiten Exzenterelement verbunden ist. Durch die Bereitstellung eines zweiten Exzenterelementes kann eine Exzenterbewegung des zweiten Schneidmessers verwirklicht werden, wodurch die gleichen Vorteile und Effekte, welche bereits für das erste Schneidmesser und Exzenterelement beschrieben wurden, auch beim zweiten Schneidmesser erzielt werden. Dabei ist zu verstehen, dass das erste und zweite Exzenterelement integral als ein einziges Exzenterelement ausgeführt sein können oder bevorzugt als zwei separate Exzenterelemente ausgebildet sein können.

Noch weiter ist es bevorzugt, dass das zweite Exzenterelement mit der Messerantriebswelle verbunden ist und eine beabstandet zur Antriebswellenachse liegende zweite Exzenterachse definiert. Auch bei dieser Ausgestaltung kann die erste und zweite Exzenterachse übereinstimmend und koaxial zueinander liegen, insbesondere wenn erstes und zweites Exzenterelement integral durch ein einziges Exzenterelement ausgebildet werden. Besonders bevorzugt ist es aber, wenn erste und zweite Exzenterachse beabstandet zueinander verlaufen, vonzugsweise parallel zueinander und beabstandet zueinander verlaufen, um hierdurch eine optimierte Arbeitsweise in der Konfiguration des ersten und zweiten Exzenterelements bei Konstruktion, Auslegung oder Parameterwahl beim Betrieb der Verteilereinrichtung zu ermöglichen.

Noch weiter ist es bevorzugt, wenn das zweite Schneidmesser an dem zweiten Exzenterelement drehbar um die zweite Exzenterachse gelagert ist. Bei dieser Ausgestaltung wird wiederum eine passive oder aktive Drehbewegung des Schneidmessers relativ zum Exzenterelement ermöglicht. Zu der Funktions- und Konstruktionsweise wird auf die voranstehende Beschreibung zum ersten Exzenterelement und dem daran drehbar gelagerten ersten Schneidmesser Bezug genommen.

Noch weiter ist es bevorzugt, wenn das Kupplungselement in eine Ausnehmung des zweiten Exzenterelements eingreift und in einer ersten Rastposition innerhalb der Ausdehnung an dem zweiten Exzenterelement das zweite Exzenterelement in einer ersten Exzentrizität der zweiten Exzenterachse zu der Antriebswellenachse positioniert und in einer zweiten Rastposition innerhalb der Ausdehnung an dem zweiten Exzenterelement das zweite Exzenterelement in einer zweiten Exzentrizität der zweiten Exzenterachse, die größer als die erste Exzentrizität ist, zu der Antriebswellenachse positioniert. Bei dieser Ausgestaltung wird auch für die Drehmomentübertragung und die Rastpositionen am zweiten Exzenterelement das Kupplungselement eingesetzt. Hierbei ist zu verstehen, dass die Funktion des Drehmomentübertragung und der Rastung zwischen der Antriebswelle und dem zweiten Exzenterelement durch ein integrales Kupplungselement realisiert werden kann, welches zugleich auch diese Funktionen in Bezug auf das erste Exzenterelement ausübt oder mittels eines zweitgeteilten Kupplurigselementes, dass aus zwei Kupplungselementbestanteilen zusammengesetzt ist, die beabstandet zueinander angeordnet und separat mit der Antriebswelle verbunden sind. Durch die Möglichkeit, auch das zweite Exzenterelement in zwei unterschiedlichen Exzentrizitäten anzuordnen wird auch die Möglichkeit eröffnet, die zweite Exzenterachse in einer kleinen und einer großen Exzentrizität zur Antriebswellenachse anzuordnen und hierdurch eine Anpassung der Betriebsparameter an unterschiedliche Viskositäten und Feststoffeigenschaften der feststoffbeladenen Flüssigkeit zu erreichen. Zudem kann hierdurch der Volumenstrom durch die Verteilereinrichtung variabler gestaltet werden, indem zwischen der ersten und der zweiten Rastposition umgeschaltet wird, die Exzentrizität der Schneidmesser dadurch verändert wird und die Summe der Öffnungsquerschnitte der Auslassöffnungen in Folge dieser Exzentrizitätsänderung größer oder kleiner eingestellt werden kann. Dabei ist zu verstehen, dass die Umschaltung zwischen der ersten und zweiten Rastposition des zweiten Exzenterelements am Kupplungselement ebenso binär oder analog erfolgen kann und ebenso durch Parameterwahl erzielt werden kann wie beim ersten Exzenterelement und insoweit wird hierzu Bezug genommen auf die vorangehende Beschreibung einer Umschaltung zwischen der ersten und zweiten Rastposition durch Drehgeschwindigkeitsänderung oder Drehrichtungsumkehr.

Noch weiter ist es bevorzugt, dass die zweite Exzenterachse um die Antriebswellenachse versetzt zu der ersten Exzenterachse liegt, vorzugsweise um 180° um die Antriebswellenachse versetzt liegt. Diese Ausgestaltung erzielt einerseits einen gleichmäßigeren Lauf der Antriebswelle durch Ausgleich der Unwuchten, die durch die Exzenter erzeugt werden, insbesondere wird ein guter Unwuchtausgleich erzielt, wenn ein Versatz von 180° zwischen der ersten und der zweiten Exzenterachse realisiert ist. Weiterhin wird durch diese unterschiedliche Anordnung der Exzenterachsen eine verbesserte Strömungsdynamik im Kammerinnenraum erreicht, in dem die feststoffbeladene Flüssigkeit an einander gegenüberliegenden Positionen der ersten und zweiten Lochmesserscheibe durch die Öffnungen in der Lochmesserscheibe hindurchgeführt wird, so dass lokal hohe Strömungsgeschwindigkeiten im Kammerinnenraum nicht erforderlich sind, um einen gleichmäßigen Ausfluss durch die Öffnungen aufrecht zu erhalten.

Noch weiter ist es bevorzugt, wenn das Kupplungselement eine Nocke umfasst, die in die Ausnehmung des ersten Exzenterelements eingreift und die Ausnehmung bei einer ersten Drehrichtung der Messerantriebswelle eine erste Rastposition für die Nocke bereitstellt und bei einer zur ersten Drehrichtung entgegengesetzten Drehrichtung der Messerantriebswelle eine zweite, hierzu versetzte Rastposition bereitstellt. Bei dieser Ausgestaltung ist, ebenso wie zuvor zum Kupplungselement beschrieben, zu verstehen, dass die Nocke, welche zum Antrieb des zweiten Exzenterelements dient, integral mit der ersten Nocke ausgeführt sein kann oder ein erstes und zweites Nockenteil vorhanden sein kann, welches die Nocke darstellt und separat für das entsprechend erste und zweite Exzenterelement den Antrieb erzielt. Ebenso kann auch am zweiten Exzenterelement eine inverse Konstruktion ausgeführt sein, bei der die Nocke am Exzenterelement ausgebildet ist und in eine Ausnehmung am Kupplungselement eingreift, um die erste und zweite Rastposition einzustellen.

Weiterhin ist es bevorzugt, wenn das erste und/oder das zweite Schneidmesser ringförmig ist und vorzugsweise an einer Innenkante und an einer Außenkante des ersten bzw. zweiten Schneidmessers Schneidkanten ausgebildet sind. Durch eine Ausgestaltung des ersten beziehungsweise zweiten Schneidmessers als ringförmiges Schneidmesser wird eine besonders günstige Bewegungsform und passive Bewegungsmöglichkeit des Schneidmessers erzielt, wenn dieses drehbar auf dem Exzenterelement gelagert ist. Das Schneidelement kann hierbei insbesondere entlang einer Kreisbahn auf der Lochmesserscheibe angeordnete Öffnungen überstreichen und diese wechselweise verschließen und freigeben, wenn das Schneidmesser auf der Exzenterbahn bewegt wird. Dabei ist insbesondere zu verstehen, dass das erste und zweite Schneidmesser durch eine ringförmige Struktur bereitgestellt wird, an der die Schneidkanten ausgebildet sind, die konzentrisch um die Exzenterachse angeordnet sind.

Schließlich ist gemäß einer weiteren bevorzugten Ausführungsform vorgesehen, dass die Ausnehmung eine abgerundete L-förmige Geometrie aufweist und die Nocke in der ersten Rastposition an einem ersten Schenkel der Ausnehmung anliegt und in der zweiten Rastposition an einem zweiten Schenkel der Ausnehmung anliegt. Durch eine solche Ausgestaltung von Ausnehmung und Nocke wird ein Abwälzen der Nocke innerhalb der L-förmigen Ausnehmung mittels Drehrichtungsumkehr der Antriebswelle ermöglicht, wodurch eine formschlüssige Drehmomentübertragung in beiden Rastpositionen sicher bewerkstelligt werden kann und eine besonders unempfindliche und robuste Kraftübertragung und Rastmechanik bereitgestellt wird.

Eine bevorzugte Ausführungsform der Erfindung wird anhand der beiliegenden Figuren beschrieben. Es zeigen:
- Figur 1:: Eine schematische längsgeschnittene Seitenansicht einer ersten bevorzugten Ausführungsform einer erfindungsgemäßen Verteilereinrichtung,
- Figur 2:: Einen Schnitt entlang der Linie A-A in Figur 1
- Figur 3:: Eine längsgeschnittene Draufsicht einer zweiten bevorzugten Ausführungsform einer erfindungsgemäßen Verteilereinrichtung,
- Figur 4:: Eine schematische perspektivische, längsgeschnittene Ansicht einer dritten bevorzugten Ausführungsform einer erfindungsgemäßen Verteilereinrichtung,
- Figur 5:: Eine längsgeschnittene Seitenansicht der Verteilereinrichtung gemäß Figur 4,
- Figur 6 a-d:: Eine Abfolge einer Umdrehung des Schneidmessers auf der Lochmesserscheibe in einer Schnittdarstellung entlang des Schnitts A-A in Figur 2.
- Figur 7:: Eine längsgeschnittene Seitenansicht einer vierten bevorzugten Ausführungsform einer erfindungsgemäßen Verteilereinrichtung,
- Figur 8:: Eine quergeschnittene Ansicht entlang der Linie C-C in Figur 7 in einer ersten Rastposition,
- Figur 9: Eine schematische Detailansicht der Ausnehmung und des Nockens der vierten Ausführungsform gemäß den Figuren 6 und 7, und

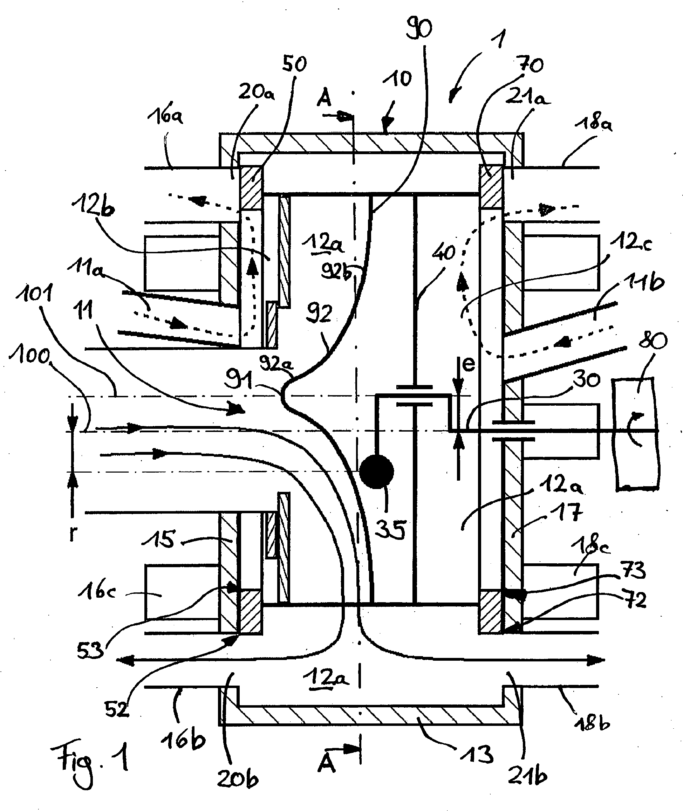

Bezugnehmend auf Figur 1 ist eine Verteilereinrichtung 1 gezeigt, welche eine zylindrische Verteilerkammer 10 mit einer axialen Einlassöffnung 11 aufweist. Die, Verteilerkammer 10 weist einen Kammerinnenraum 12 auf, in den die Einlassöffnung 11 durch eine vordere Stirnwand 15 mündet.

Die Verteilerkammer 10 ist zylindrisch aufgebaut und weist eine zylindrische Seitenwand 13 auf. In einem unteren Abschnitt dieser Seitenwand 13 ist eine Auslassöffnung (nicht dargestellt) für Feststoffe angeordnet.

Die vordere Stirnwand 15 der Verteilerkammer weist eine Mehrzahl von Anschlussstutzen 16 a, b, c, ... auf, die als Rohrflansche auf der von dem Kammerinnenraum wegweisenden Seite der Stirnwand 15 ausgebildet sind. Auf diese Anschlussstutzen 16a, b, c... können Schläuche aufgesteckt werden, um die aus der Verteilerkammer heraus verteilte, feststoffbeladene Flüssigkeit auf eine Vielzahl von Schläuchen zu verteilen und auszubringen.

Die der Stirnwand 15 gegenüber liegende hintere Stirnwand 17 ist - mit Ausnahme der Einlassöffnung - übereinstimmend zur vorderen Stirnwand 15 augebildet und weist ebenso eine Vielzahl von Auslassstutzen 18 a, b, c, ... auf.

Die Anschlussstutzen 16 a, b, c, ... und 18 a, b, c, ... sind auf einer Kreisbahn angeordnet. Diese Kreisbahn weist einen Mittelpunkt auf, der auf einer Antriebswellenachse 100 liegt.

Fluchtend zu den Anschlussstutzen 16a, b, c, ... sind Schneidöffnungen 20a, b,... und 21a, b,... zu jedem Anschlussstutzen in der Stirnwand 15 bzw. 17 angeordnet. Durch diese Schneidöffnungen kann die feststoffbeladenen Flüssigkeit aus dem Kammerinnenraum 12 in die Anschlussstutzen 16a, b, c, ....bzw. 18a, b, c,... eintreten.

Im Kammerinnenraum 12 ist eine Messerantriebswelle 30 angeordnet, die sich durch eine Lageröffnung in der hinteren Stirnwand 17 erstreckt und dort drehbar um die Antriebswellenachse 100 gelagert ist.

Auf der Antriebswelle ist im Kammerinnenraum benachbart zur vorderen Stirnwand 15 ein Exzenter 40 befestigt. Der Exzenter 40 definiert eine erste Exzenterachse 101. Die Exzenterachse 101 weist eine Exzentrizität "e" zu der Antriebswellenachse 100 auf. An dem Exzenter 40 ist ein erstes Schneidmesser 50 und ein zweites Schneidmesser 70 mittels eines Wälz- oder Gleitlagers (nicht gezeigt) drehbar um die Exzenterachse 101 gelagert ist. Die Exzenterachse 101 stellt die Drehachse des Wälz- oder Gleitlagers und der Schneidmessers 50, 70 um den Exzenter 40 dar.

Die Antriebswelle 30 ist mit einem Ausgleichsgewicht 35 gekoppelt dessen Massenschwerpunkt exzentrisch um den Betrag r zur Antriebswellenachse 100 angeordnet ist. Der Massenmittelpunkt des Ausgleichsgewichts 35 liegt um 180° versetzt zur Exzenterachse 101. Der Abstand r und die Masse des Ausgleichsgewichts 35 ist solcher Art bemessen, dass im Abgleich mit der Exzentrizität E und der Masse des Exzenters 40 und der daran befestigten und exzentrisch bewegten Bauteile eine Massenausgleich erster Ordnung der bewegten Massen um die Antriebswellenachse 100 erreicht wird. Insbesondere können mittels des Ausgleichgewichts auch die Massenkräfte der Flüssigkeit mit ausgeglichen werden.

Das erste Schneidmesser 50 liegt mit einer äußeren Schneidkante 52 und einer inneren Schneidkante 53 bündig an der zum Kammerinnenraum weisenden Innenwand der vorderen Stirnwand 15 an. Die äußere Schneidkante 52 und die innere Schneidkante 53 wirken daher mit den Kanten der Öffnungen 20a,b der kreisförmig angeordneten Schneidöffnungen in der vorderen Stirnwand 15 zusammen und bewirken eine Scherwirkung auf Feststoffe, die durch diese Auslassöffnungen hindurch treten, wenn sich das Schneidmesser 50 bewegt.

In gleicher Weise liegt eine äußere und innere Schneidkante 72, 73 des zweiten Schneidmessers 70 an der Innenwandfläche der hinteren Stirnwand 17 an und wirkt mit den Schneidkanten der Öffnungen 21a,b,... zusammen, wenn das Schneidmesser 70 sich relativ zur hinteren Stirnwand 17 bewegt.

Die Antriebswelle 30 ist auswärts zum Kammerinnenraum mit einem Antriebsmotor 80 gekoppelt, welcher die Messerantriebswelle in Rotation versetzt und hierdurch auch den Exzenter 40 um die Antriebswellenachse rotieren lässt. Durch die passive Drehbarkeit der Schneidmesser 50, 70 um die Exzenterachse 101 führen die Schneidmesser auf den Innenflächen der Stirnwände 15, 17 eine Bewegung nach Art eines Läppvorgangs aus.

Am Exzenter 40 ist ein Flüssigkeitsleitteller 90 befestigt, der sich mit dem Exzenter bewegt. Der Flüssigkeitsleitteller 90 weist eine zentrale Erhebung 91 auf, die in Richtung zur Einlassöffnung 11 weist. Ausgehend von dieser zentralen Erhebung 91 ist der Flüssigkeitsleitteller 90 mit einer gekrümmten Fläche 92 versehen, die aus einer axialen Ausrichtung 92a in eine radiale Ausrichtung 92b verläuft.

Der Flüssigkeitsleitteller lenkt die durch die Einlassöffnung 11 eintretende Flüssigkeit aus ihrer axialen Strömungsrichtung in eine radiale Strömungsrichtung um und leitet diese hierdurch gleichmäßig zu den Auslassöffnungen 20a,b,... und 21a,b,.... Diese Umlenkung wird verstärkt zu denjenigen Auslassöffnungen durchgeführt, welche aufgrund der Exzenterbewegung gerade geöffnet sind und nicht durch die Schneidmesser 50,70 verschlossen sind, in dem sich der Flüssigkeitsleitteller 90 mit dem Exzenter mit bewegt und die Erhebung 91 hierdurch exzentrisch zu Einlassöffnung auf einer Kreisbahn kreist und sich jeweils gegenüberliegend zu den geöffneten Auslassöffnungen in Bezug auf die Antriebswellenachse 100 befindet.

Durch den Flüssigkeitsleitteller 90 sowie durch einen im Bereich der Einlassöffnung 11 angeordneten feststehenden Ringwandabschnitt 15a und einen am Exzenter 40 montierten und mit diesem mitbewegten Ringwandabschnitt 40a, der abdichtend auf den Ringwandabschnitt 15a gleitet, wird der Kammerinnenraum 12 in einen flüssigkeitsleitenden Raum 12a, einen ersten luftleitenden Raum 12b und einen zweiten luftleitenden Raum 12c unterteilt.

Der luftleitende Raum 12b ist benachbart zum Schneidmesser 50 angeordnet, dass an der vorderen Stirnwand 15 anliegt. Ein Lufteinlassstutzen 11a ermöglicht den Zutritt von Umgebungsluft in den luftleitenden Raum 12b. Diese Umgebungsluft wird in der dargestellten Exzenteranordnung durch den luftleitenden Raum 12b zu der Auslassöffnung 16a geleitet.

In entsprechend spiegelsymmetrischer Weise ist in der Stirnwand 17 ein Lufteinlassstutzen 11b angeordnet, welcher den Lufteintritt in den luftleitenden Raum 12c und die Durchleitung der Luft in die Auslassöffnung 21a und den Anschlussstutzen 18a in der abgebildeten Exzenterstellung ermöglicht.

Die Schneidmesser 50, 70 haben eine Querschnittsbreite, die geringer ist als der Durchmesser der Auslassöffnungen 20a, b, ... und 21a, b,.... Hierdurch wird erreicht, dass zu jedem Zeitpunkt der Exzenterbewegung die Auslassöffnungen 20a, b,... und 21a, b,... entweder mit dem flüssigkeitsleitenden Abschnitt 12a des Kammerinnenraums in Fluidverbindung stehen oder mit dem luftleitenden Abschnitt 12b und 12c in Fluidverbindung stehen. Diese stets vorhandene Fluidverbindung ermöglicht es, dass die Flüssigkeit, die während der Öffnung einer der Auslassöffnungen 20 a, b,... und 21a, b,... durch diese Auslassöffnungen durchtritt und hierdurch eine sich bewegende Flüssigkeitssäule in den Anschlussstutzen 16a, b, ... und 18a, b,... erzeugt, nicht durch einen Verschluss der Auslassöffnungen 20a, b,..., 21a, b,... abrupt abgebremst wird, wenn sich das Schneidmesser in Folge der Exzenterbewegung weiterbewegt hat, sondern nach Sperrung des Flüssigkeitszutritts durch Luftzufuhr ungehindert sich weiterbewegen kann. Hierdurch wird eine praktisch konstante, beschleunigungsfreie Bewegung eines Flüssigkeit-/Luftgemisches durch die Anschlussstutzen 16a, 18a und daran angeschlossene Schlauch- oder Rohrleitungen erzielt und die Dichtungen und Bauteile innerhalb der Verteilereinrichtung davor bewahrt hohen mechanischen und hydraulischen Pulsbelastungen ausgesetzt zu sein.

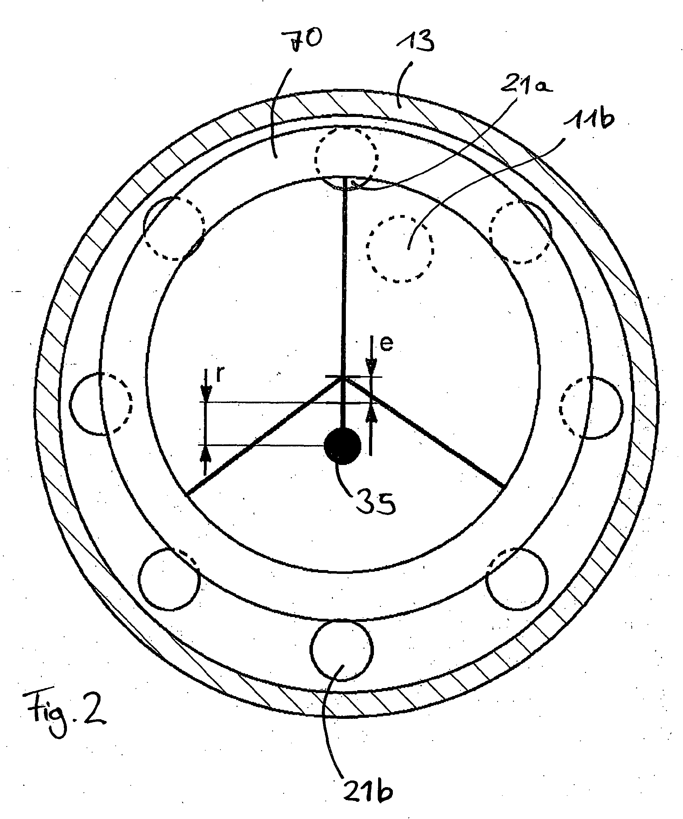

Figur 2 zeigt eine schematische, quergeschnittene Ansicht der Ausführungsform gemäß Figur 1. Man erkennt, dass in der dargestellten Exzenterposition, in welcher der Exzenter in Bezug auf die Antriebswellenachse auf 12 Uhr steht, die am tiefsten liegende Einlassöffnung 21b vollständig geöffnet ist und die am höchsten stehende Einlassöffnung 21a vollständig verschlossen ist. Die übrigen Öffnungen sind zu einem geringen Anteil verschlossen (Öffnungen auf 4 und 8 Uhr), halbverschlossen (Öffnungen auf 3 und 9 Uhr) und teilweise geöffnet (Öffnungen auf 11 und 1 Uhr). Durch die Exzenterbewegung des Schneidmessers 70 ändert sich diese Öffnungssitüation kontinuierlich und laufend.

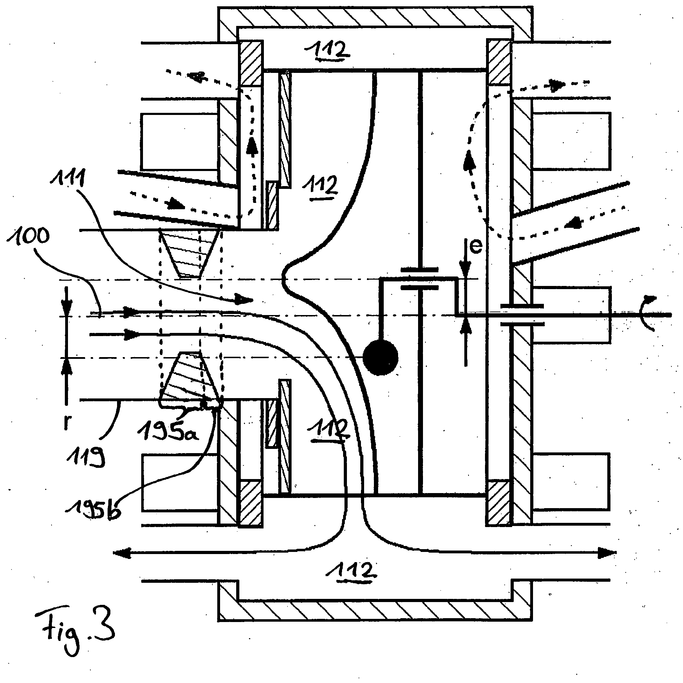

Figur 3 zeigt eine Ansicht gemäß Figur 1 einer zweiten Ausführungsform der Erfindung. Die zweite Ausführungsform der Erfindung ist weitestgehend übereinstimmend mit der ersten Ausführungsform und wird nachfolgend nur hinsichtlich ihrer Unterschiede beschrieben.

Bei der zweiten Ausführungsform wird die feststoffhaltige Flüssigkeit ebenfalls durch eine Einlassöffnung 111 zugeführt, die in Strömungsrichtung hinter einem Einlasskanal 119 liegt. Der Einlasskanal 119 ist axial in Bezug auf die Antriebswellenachse 100 angeordnet und die Flüssigkeit strömt hierdurch axial in den zylindrischen Kammerinnenraum 112 ein.

In dem Einlasskanal 119 ist eine Düse 195 angeordnet, welche eine Querschnittsverengung mit anschließender Querschnittserweiterung im Einlasskanal 119 verursacht. Hierdurch wird die Flüssigkeit zunächst im Bereich der Querschnittsverengung 195a beschleunigt, um hierdurch im Bereich der Querschnittserweiterung 195b wieder verzögert zu werden. Diese Beschleunigung und Verzögerung hat eine Homogenisierung der Flüssigkeitsströmungsrichtung zur Folge, wodurch die Flüssigkeit in angenäherter axialer Strömungsrichtung in den Kammerinnenraum 112 eintritt. Die zweite Ausführungsform ist aufgrund dieser Fortbildung unempfindlich gegenüber Anschlussweisen an den Einlasskanal 119, die mit starken Krümmungen eines angeschlossenen Zuführschlauches für die feststoffhaltige Flüssigkeit arbeiten, um die erfindungsgemäße Verteilereinrichtung auch unter beengten Platzverhältnissen betreiben zu können.

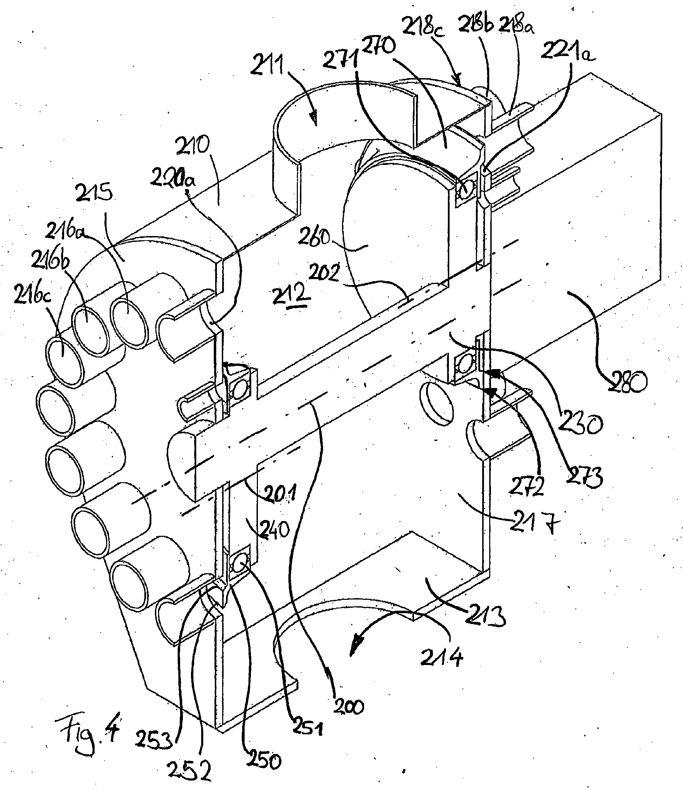

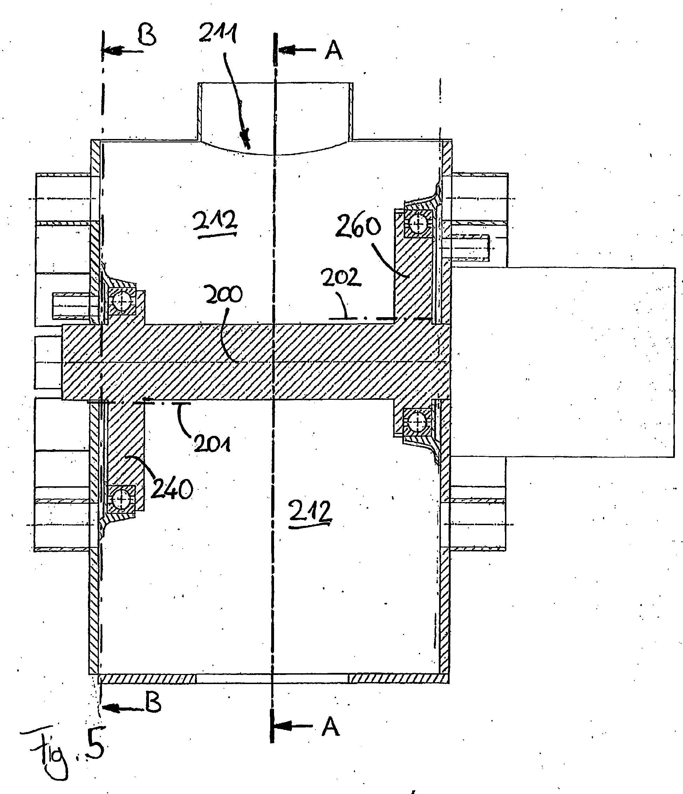

Bezugnehmend auf Figur 4 und 5 ist eine dritte Ausführungsform der erfindungsgemäßen Verteilereinrichtung gezeigt, welche eine Verteilerkammer 210 mit einer Einlassöffnung 211 aufweist. Die Verteilerkammer 210 weist einen Kammerinnenraum 212 auf, in den die Einlassöffnung 211 mündet.

Die Verteilerkammer 210 ist im oberen Teil zylindrisch aufgebaut und läuft nach unten hin zu einem trapezförmigen Querschnitt mit konischem Seitenwandverlauf aus. In einem unteren Gehäuseboden 213 ist eine Auslassöffnung 214 für Feststoffe angeordnet, die gegenüberliegend zur Einlassöffnung 211 in dem oberen Bereich der Verteilerkammer angeordnet ist.

Eine vordere Stirnwand 215 der Verteilerkammer weist eine Mehrzahl von Anschlussstutzen 216 a, b, c, ... auf, die als Rohrflansche auf der von dem Kammerinnenraum wegweisenden Seite der Stirnwand 215 ausgebildet sind. Auf diese Anschlussstutzen 216 können Schläuche aufgesteckt werden, um die aus der Verteilerkammer heraus verteilte, feststoffbeladene Flüssigkeit auf eine Vielzahl von Schläuchen zu verteilen und auszubringen.

Die der Stirnwand 215 gegenüber liegende hintere Stirnwand 217 ist übereinstimmend zur vorderen Stirnwand 215 ausgebildet und weist ebenso eine Vielzahl von Auslassstutzen 218 a, b, c, ... auf.

Die Anschlussstutzen 216 a, b, c, ... und 218 a, b, c, ... sind auf einer Kreisbahn angeordnet. Diese Kreisbahn weist einen Mittelpunkt auf, der auf einer Antriebswellenachse 100 liegt.

Fluchtend zu den Anschlussstutzen 216a, 216b, 216c, ... sind Schneidöffnungen 220a und 221a zu jedem Anschlussstutzen in der Stirnwand 215 bzw. 217 angeordnet. Durch diese Schneidöffnungen kann die feststoffbeladenen Flüssigkeit aus dem Kammerinnenraum 212 in die Anschlussstutzen 216a, b, c, ... bzw. 218a, b, c,... eintreten.

Im Kammerinnenraum 212 ist eine Messerantriebswelle 230 angeordnet, die sich beidseits durch Lageröffnungen in den Stirnwänden 215, 217 erstreckt und dort drehbar um die Antriebswellenachse gelagert ist.

Auf der Antriebswelle ist im Kammerinnenraum benachbart zur vorderen Stirnplatte 215 ein erster Exzenter 240 befestigt, auf dem ein erstes Schneidmesser 250 mittels eines Wälzlagers 251 drehbar gelagert ist. Der erste Exzenter 240 definiert eine erste Exzenterachse 201. Die Exzenterachse 201 stellt die Drehachse des Wälzlagers 251 und des Schneidmessers 250 um den Exzenter 240 dar. Gegenüberliegend ist im Kammerinnenraum benachbart zur hinteren Stirnwand 217 ein zweiter Exzenter 260 auf der Messerantriebswelle befestigt, der eine zweite Exzenterachse 202 definiert. Die zweite Exzenterachse 202 weist den gleichen Abstand von der Antriebswellenachse 100 auf wie die erste Exzenterachse 201, ist jedoch um 180° zu der ersten Exzenterachse 201 um die Antriebswellenachse 100 versetzt angeordnet.

Auf dem zweiten Exzenter 260 ist mittels Wälzlagers 271 ein zweites Schneidmesser 70 um die zweite Exzenterachse 202 drehbar gelagert. Anstelle einer Wälzlagerung 251, 271 kann auch eine Gleitlagerung vorgesehen sein.

Das erste Schneidmesser 250 liegt mit einer äußeren Schneidkante und einer inneren Schneidkante bündig an der zum Kammerinnenraum weisenden Innenwand der vorderen Stirnwand 215 an. Die äußere Schneidkante 252 und die innere Schneidkante 253 wirken daher mit den Kanten der Öffnungen 220a,b der kreisförmig angeordneten Schneidöffnungen in der vorderen Stirnplatte zusammen und bewirken eine Scherwirkung auf Feststoffe, die durch diese Auslassöffnungen hindurch treten, wenn sich das Schneidmesser 250 bewegt.

In gleicher Weise liegt eine äußere und innere Schneidkante 272, 273 an der Innenwandfläche der hinteren Stirnwand 217 an und wirkt mit den Schneidkanten der Öffnungen 221a,... zusammen, wenn das Schneidmesser 270 sich relativ zur hinteren Stirnwand 217 bewegt.

Die Antriebswelle 230 ist auswärts zum Kammerinnenraum mit einem Antriebesmotor 280 gekoppelt, welcher die Messerantriebswelle in Rotation versetzt und hierdurch auch die Exzenter 240, 260 um die Antriebswellenachse rotieren lässt.

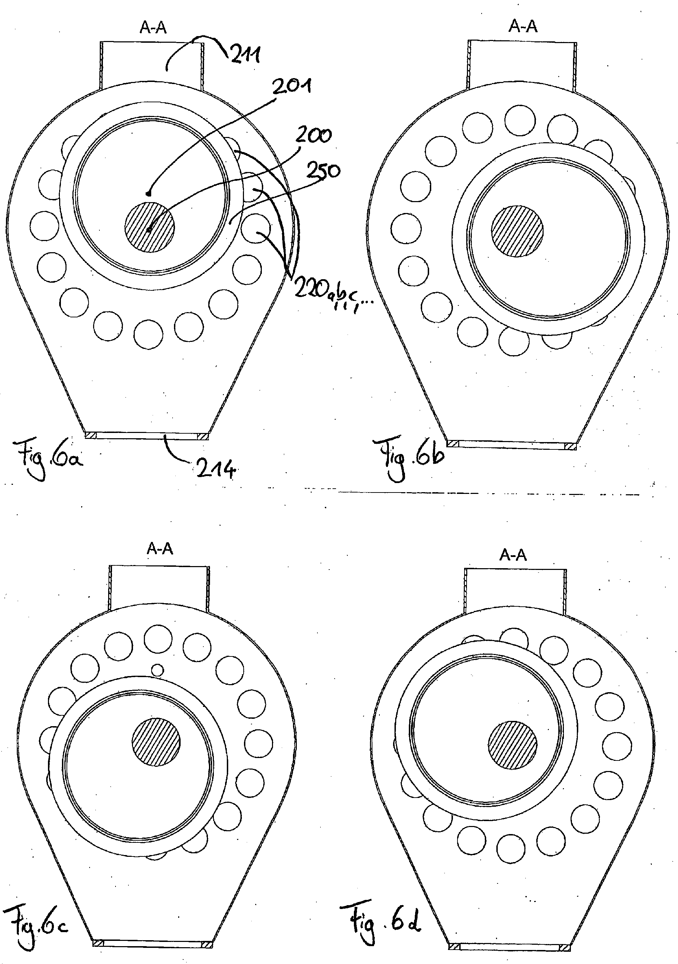

In den Figuren 6a-d ist ein Ablauf einer Exzenterbewegung in einer Schnittdarstellung gemäß Schnitt A-A in Figur 5 dargestellt. Wie man erkennen kann, wird durch das Schneidmesser 250 ein Teil der Auslassöffnungen 220a, b, c verschlossen, eine weitere Anzahl von Auslassöffnungen 220a, b, c, ...teilweise verschlossen und eine weitere Anzahl an Auslassöffnungen 220a, b, c ... nicht verschlossen. Durch die dargestellte exzentrisch kreisende Bewegung des Schneidmessers um die Antriebswellenachse 200 werden alle Auslassöffnungen durch das Schneidmesser überstrichen, sodass eine Schneidwirkung für Feststoffe in Zusammenwirkung mit den Kanten der Auslassöffnungen 220a, b, c erzielt wird und die Auslassöffnungen wechselweise geöffnet und geschlossen werden und hierdurch ein Durchtritt der Flüssigkeit erfolgen kann.

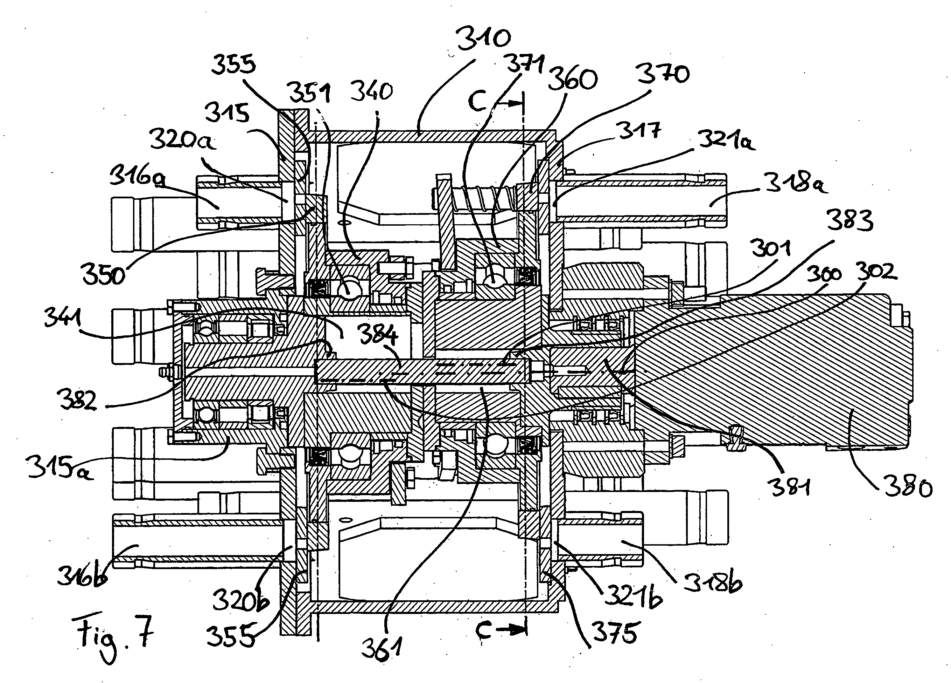

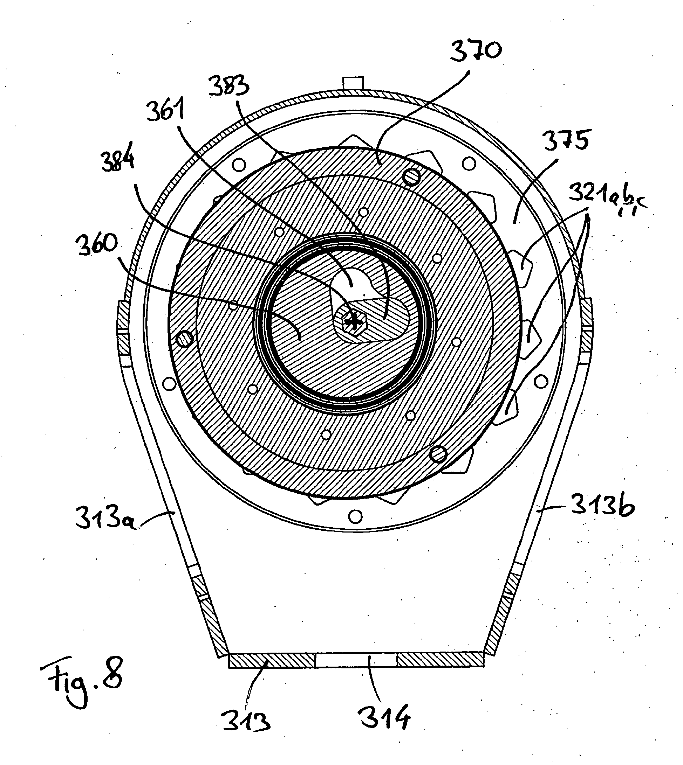

Figur 7 zeigt eine längsgeschnittene Draufsicht auf eine vierte Ausführungsform einer erfindungsgemäßen Verteilereinrichtung. Die Ausführungsform gemäß Figur 7 und 8 zeichnet sich durch einen Verstellmechanismus aus, der die Exzentrizität der Exzenterachse zwischen einer kleinen und einer großen Exzentrizität verstellen kann.

Wie bei den vorhergehenden Ausführungsformen weist die Verteilereinrichtung gemäß Figuren 7 und 8 ein Verteilerkammergehäuse 310 auf, in dem eine Einlassöffnung (nicht dargestellt) angeordnet ist, die bei dieser vierten Ausführungsform radial von oben in die Verteilerkammer mündet. Stirnseitig wird die Verteilerkammer durch Stirnwände 315, 317 verschlossen, in denen mehrere kreisförmig angeordnete Auslassöffnungen 320a, b, 321a, b, angeordnet sind, die mit Auslassstutzen 316a, b, 318a, b fluchtend kommunizieren.

In einer Bodenplatte 313 ist eine Auslassöffnung 314 für Feststoffe angeordnet, in den nach unten konisch zusammenlaufenden Seitenwänden sind Wartungs-öffnungen 313a, b, vorhanden, durch welche in den Innenraum der Verteilerkammer hineingegriffen werden kann.

In der Verteilerkammer ist ein erster Exzenter 340 und ein zweiter Exzenter 360 angeordnet. Der erste Exzenter definiert eine erste Exzenterachse 301, der zweite Exzenter definiert eine zweite Exzenterachse 302, die in Bezug auf eine Antriebswellenachse 300 um 180° versetzt zu der ersten Exzenterachse 301 liegt. Die Exzenter 340, 360 bewegen sich daher um 180° phasenversetzt (phasenversetzt geht wie oben beschrieben bei der neuen Ausführung nicht) zueinander und sorgen auf diese Weise für einen Massenausgleich erster Ordnung um die Antriebswellenachse 300.

Auf den ersten Exzenter 340 ist mittels eines Kugellagers 351 ein Schneidmesser 350 drehbar gelagert, analog ist auf dem zweiten Exzenter 360 ein Schneidmesser 370 mittels eines Kugellagers 371 drehbar gelagert.

Die Exzenter 340, 360 sind mittels Nocken 382, 383 mit einem Antriebszapfen 381 eines Antriebsmotors 380 gekoppelt. Die Nocken 382, 383 weisen jeweils eine Sechskantbohrung auf, durch die eine Sechskantstange 384 hindurchgeführt ist.

Der Nocken 383 ist mittels einer Passfeder mit dem Antriebszapfen 381 drehmomentfest verbunden. Über eine Sechskantstange 384 wird das Drehmoment aus diesem Nocken 382 auf den Nocken 383 übertragen. Der Nocken 382 ist mittels eines Wälz-oder Gleitlagers, hier eines Zylinderrollenlagers und eines Kugellagers in einem Lagergehäuse 315a drehbar um die Antriebswellenachse gelagert.

Bei einem Antrieb des Antriebsmotors 380 im Uhrzeigersinn (entsprechend einer Rotation des Exzenters 360 in der Ansicht gemäß Figur 8 entgegen dem Uhrzeigersinn) stellt sich eine Positionierung des Nockens 383 in der in Figur 8 gezeigten Stellung ein. Bei dieser Stellung weist die Exzenterachse 302 eine erste Exzentrizität zur Antriebswellenachse 300 auf.

Wird die Drehrichtung des Antriebsmotors 380 umgekehrt und der Antriebsmotor entgegen dem Uhrzeigersinn betrieben, so schwenkt der Nocken 383 innerhalb einer L-förmigen Ausnehmung 361 im Exzenter 360 in eine zweite Rastposition. Hierbei bewegt sich der mit der Sechskantstange durchsetzte Abschnitt des Nockens 383 in den Figur 8 gezeigten freien Raum der Ausnehmung 361 und die Nocke führt in der Ansicht gemäß Figur 8 eine Schwenkbewegung von 90° im Uhrzeigersinn aus. Die sich nach dieser Schwenkbewegung einstellende Exzentrizität der Exzenterachse 301 zur Antriebswellenachse 300 ist größer als die erste Exzentrizität, wodurch das Schneidmesser 370 auf einer Bahn mit größerer Exzentrizität geführt wird.

In analoger, allerdings spiegelbildlich zu einer zentralen Querschnittsfläche ausgeführter Konstruktionsweise wird auch bei dem ersten Exzenter 340 ein entsprechender Antrieb durch den Nocken 382 erreicht und eine Umstellung zwischen einer kleinen und großen Exzentrizität durch eine Drehrichtungsumkehr des Motors 380 erzielt.

Dabei ist die Anordnung der Ausnehmung 361, 341 in den Exzentern 340, 360 und der Nocken 382, 383 solcher Art gewählt, dass sich beide Exzenter 340, 360 stets in einer übereinstimmenden Exzentrizität zu Antriebswellenachse 300 befinden.

Durch die Möglichkeit der Umstellung zwischen einer kleinen und einer großen Exzentrizität wird bei der Ausführungsform gemäß Figuren 7 und 8 ermöglicht, eine kleine und große Durchströmung des Verteilers zu erzielen. Bei der kleinen Exzentrizität sind die Durchtrittsöffnungen in einer Lochmesserscheibe 355, 375, die benachbart zu den Stirnwänden 315 bzw. 317 angeordnet sind, stets teilweise oder vollständig verschlossen, wie aus Figur 8 ersichtlich.

Bei einer großen Exzentrizität sind diese Öffnungen in den Lochmesserscheiben hingegen in dem der Exzenterachse gegenüberliegenden Bereich vollständig geöffnet, auf der Seite der Exzenterachse vollständig geschlossen und in den Bereichen seitlich hiervon teilweise geöffnet, sodass sich bei konstant gehaltenem Innendruck in der Verteilerkammer ein insgesamt größerer Durchsatz an Flüssigkeit durch die Öffnungen ergibt. Bei Einsatz der Verteilereinrichtung hinter Druckpumpen, wie, z. B. Kreiselpumpen oder an einem Kompressortankwagen kann hierdurch der Volumenstrom durch die Verteilereinrichtung unmittelbar erhöht werden. Bei Einsatz der Verteilereinrichtung hinter einer Verdrängerpumpe würde sich beim Verstellen der Exzentrizität ein andere Gehäusedruck einstellen und der Betriebspunkt der Verdrängerpumpe müsste an den erhöhten Durchsatz angepasst werden bzw. die Verteilereinrichtung kann an verschiedene Volumenströme der Verdrängerpumpe angepasst werden.

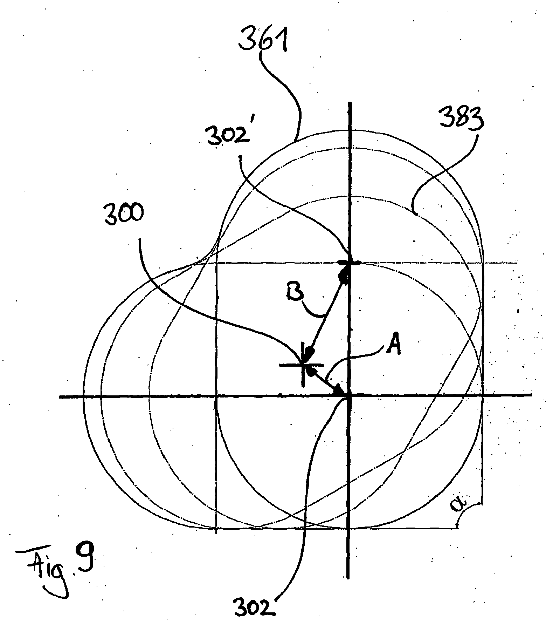

Figur 9 zeigt die Kinematik des Verstellmechanismus des Nockens 383 in der Ausnehmung 361. Wie man aus dieser Figur erkennt, kann der Nocken eine erste Position mit geringer Exzentrizität A zwischen einer Exzenterachse 302 und der Antriebswellenachse 300 einnehmen und bei Drehrichtungsumkehr in eine zweite Position verschwenken, indem er sich innerhalb der Ausnehmung abwälzt, eine Schwenkbewegung von 90° ausführt und dann in dem bisher freien Abschnitt der Ausnehmung zu liegen kommt. In dieser zweiten. Stellung ist der Nocken ebenfalls zur formschlüssigen Übertragung von Drehmomenten in der Ausnehmung angeordnet und weist nun eine zweite Exzentrizität B zwischen einer Exzenterachse 302 und der Antriebswellenachse 300 auf, die größer ist als die Exzentrizität A.

## Patentansprüche

1. Verteilereinrichtung für feststoffhaltige Flüssigkeiten,
umfassend:
- eine Verteilerkammer mit einer Einlassöffnung, die in einen Kammerinnenraum der Verteilerkammer mündet,
- eine erste Lochmesserscheibe mit mehreren Auslassöffnungen, welche den Kammerinnenraum mit mehreren Anschlussstutzen verbinden,
- eine Messerantriebswelle, die drehbar um eine Antriebswellenachse gelagert ist,
- ein erstes Exzenterelement, welches mit der Messerantriebswelle verbunden ist und eine beabstandet zur Antriebswellenachse liegende erste Exzenterachse definiert, und
- ein erstes Schneidmesser, weiches mit dem ersten Exzenterelements verbunden ist und eine Schneidkante aufweist, welche an der ersten Lochmesserscheibe anliegt und mittels des ersten Exzenterelements relativ zu der ersten Lochmesserscheibe bewegbar ist,
- **dadurch gekennzeichnet**, das ein-Ausgleichgewichtselement mit der Messerantriebswelle verbunden ist, dessen Massenschwerpunkt exzentrisch zu der Antriebswellenachse angeordnet ist, vorzugsweise um 180° versetzt zur ersten Exzenterwellenachse.

2. Verteilereinrichtung nach Anspruch 1,
**gekennzeichnet durch** ein Kupplungselement, welches das Exzenterelement mit der Messerantriebswelle verbindet und welches in einer ersten Rastposition an dem Exzenterelement das Exzenterelement in einer ersten Exzentrizität der ersten Exzenterachse zu der Antriebswellenachse positioniert und in einer zweiten Rastposition an dem Exzenterelement das Exzenterelement in einer zweiten Exzentrizität der ersten Exzenterachse, die größer als die erste Exzentrizität ist, zu der Antriebswellenachse positioniert, wobei das Kupplungselement vorzugsweise mittels einer Drehrichtungsumkehr der Messerantriebswelle zwischen der ersten und zweiten Rastposition hin- und her bewegt wird.

3. Verteilereinrichtung nach Anspruch 2,
**dadurch gekennzeichnet, dass** das Kupplungselement formschlüssig in eine Ausnehmung des ersten Exzenterelements eingreift, wobei das Kupplungselement vorzugsweise eine Nocke umfasst, die in die Ausnehmung des ersten Exzenterelements eingreift und die Ausnehmung bei einer ersten Drehrichtung der Messerantriebswelle eine erste Rastposition für die Nocke bereitstellt und bei einer zur ersten Drehrichtung entgegengesetzten Drehrichtung der Messerantriebswelle eine zweite Rastposition bereitstellt.

4. Verteilereinrichtung nach einem der vorhergehenden Ansprüche 2-3,
**dadurch gekennzeichnet, dass** das Kupplungselement und die Antriebswelle integral ausgeführt sind.

5. Verteilereinrichtung nach einem der vorhergehenden Ansprüche,
**dadurch gekennzeichnet, dass** eine zweite Lochmesserscheibe mit mehreren Aüslassöffnungen den Innenraum der Verteilerkammer begrenzt und ein zweites Schneidmesser bereitgestellt ist, welches eine Schneidkante aufweist, die an der zweiten Lochmesserscheibe anliegt und relativ zu dieser beweglich ist, wobei das zweite Schneidmesser vorzugsweise mit dem ersten Exzenterelement verbunden ist und die Schneidkante des zweiten Exzenterelements mittels des ersten Exzenterelements relativ zu der zweiten Lochmesserscheibe bewegbar ist.

6. Verteilereinrichtung nach Anspruch 5,
**dadurch gekennzeichnet, dass** das erste und oder das zweite Schneidmesser an dem ersten Exzenterelement drehbar um die erste Exzenterachse gelagert ist.

7. Verteilereinrichtung nach einem der vorhergehenden Ansprüche,
**dadurch gekennzeichnet, dass** die Einlassöffnung eine Einlassrichtung der feststoffhaltigen Flüssigkeit definiert, die parallel, vorzugsweise koaxial zur Antriebswellenachse liegt, wobei vorzugsweise im Kammerinnenraum eine Flüssigkeitsleiteinrichtung angeordnet ist, welche so geformt ist, dass die axial zuströmende Flüssigkeit daran nach radial auswärts umgelenkt wird.

8. Verteilereinrichtung nach einem der vorhergehenden Ansprüche, **gekennzeichnet, durch** einen der Einlassöffnung in den Kammerinnenraum in Strömungsrichtung vorgelagerten Strömungskanal und eine in diesem Strömungskanal angeordnete Düse mit einer Querschnittsverringerung, gefolgt von einer Querschnittserweiterung in Strömungsrichtung.

9. Verteilereinrichtung nach Anspruch 5,
**dadurch gekennzeichnet, dass** das zweite Schneidmesser mit einem zweiten Exzenterelement verbunden ist, wobei vorzugsweise das zweite Exzenterelement mit der Messerantriebswelle verbunden ist und eine beabstandet zur Antriebswellenachse liegende zweite Exzenterachse definiert, die vorzugsweise nicht koaxial zur ersten Exzenterwelle verläuft.

10. Verteilereinrichtung nach dem Anspruch 9,
**dadurch gekennzeichnet, dass** das zweite Schneidmesser an dem zweiten Exzenterelement drehbar um die zweite Exzenterachse gelagert ist.

11. Verteilereinrichtung nach den Ansprüchen 2 und 5, und einem der Ansprüch 6-10
**dadurch gekennzeichnet, dass** das Kupplungselement in eine Ausnehmung des zweiten Exzenterelements eingreift und in einer ersten Rastposition an dem zweiten Exzenterelement das zweite Exzenterelement in einer ersten Exzentrizität der zweiten Exzenterachse zu der Antriebswellenachse positioniert und in einer zweiten Rastposition an dem zweiten Exzenterelement das zweite Exzenterelement in einer zweiten Exzentrizität der zweiten Exzenterachse, die größer als die erste Exzentrizität ist, zu der Antriebswellenachse positioniert.

12. Verteilereinrichtung nach einem der Ansprüche 9-11,
**dadurch gekennzeichnet, dass** die zweite Exzenterachse um die Antriebswellenachse versetzt zu der ersten Exzenterachse liegt, vorzugsweise um 180° um die Antriebswellenachse versetzt liegt.

13. Verteilereinrichtung nach den Ansprüchen 3 und 5, und einem der Ansprüche 6-12,
**dadurch gekennzeichnet, dass** die oder eine zweite Nocke Nocke in die Ausnehmung des zweiten Exzenterelements eingreift und die Ausnehmung bei einer ersten Drehrichtung der Messerantriebswelle eine erste Rastposition für die Nocke bereitstellt und bei einer zur ersten Drehrichtung entgegengesetzten Drehrichtung der Messerantriebswelle eine zweite Rastpostion bereitstellt.

14. Verteilereinrichtung nach einem der vorhergehenden Ansprüche,
**dadurch gekennzeichnet, dass** das erste und/oder das zweite Schneidmesser ringförmig ist und mindestens eine umlaufende Schneidkante aufweist, die an der ersten bzw. zweiten Lochmesserscheibe anliegt, vorzugsweise an einer Innenkante und an einer Außenkante des ersten bzw. zweiten Schneidmessers umlaufende Schneidkanten ausgebildet sind.

15. Verteilereinrichtung nach einem der vorhergehenden Ansprüche,
**dadurch gekennzeichnet, dass**
- in der Lochmesserscheibe eine Belüftungsöffnung vorhanden ist, die in einen von der Scheidkante, insbesondere der inneren Schneidkante des Schneidmessers umschriebenen Raum mündet,
- der Abstand zwischen der ersten/zweiten Exzenterachse zu der Antriebswellenachse und der Durchmesser der Schneidkante, insbesondere der äußeren Schneidkante so gewählt ist, dass die Schneidkante bzw. die äußere Schneidkante sich auf einer Exzenterbahn bewegt, die eine Fläche umschließt, in welche die Belüftungsöffnung mündet,
- wobei vorzugsweise der Abstand zwischen der Innen- und der Außenkante des ersten und/oder des zweiten Schneidmessers kleiner als oder gleich wie der Durchmesser der Äuslassöffnungen in der Lochmesserscheibe ist.

16. Verteilereinrichtung nach Anspruch 3 oder Anspruch 13,
**dadurch gekennzeichnet, dass** die Ausnehmung eine abgerundete L-förmige Geometrie aufweist und die Nocke in der ersten Rastposition an einem ersten Schenkel der Ausnehmung anliegt und in der zweiten Rastposition an einem zweiten Schenkel der Ausnehmung anliegt.

## Claims

1. Distributor device for solids-containing liquids,
comprising:
- a distributor chamber with an inlet opening which issues into a chamber interior space of the distributor chamber,
- a first perforated blade disk with a plurality of outlet openings which connect the chamber interior space to a plurality of connection ports,
- a blade drive shaft which is mounted so as to be able to rotate about a drive shaft axis,
- a first eccentric member which is connected to the blade drive shaft and defines a first eccentric axis spaced apart from the drive shaft axis, and
- a first cutting blade which is connected to the first eccentric member and has a cutting edge which lies against the first perforated blade disk and can be moved relative to the first perforated blade disk by means of the first eccentric member,
**characterised in that** a counterweight member is connected to the blade drive shaft, the centre of gravity of which is arranged eccentrically with respect to the drive shaft axis, preferably offset by 180° with respect to the eccentric shaft axis.

2. Distributor device as claimed in claim 1,
**characterised by** a coupling member which connects the eccentric member to the blade drive shaft and which, in a first detent position on the eccentric member, positions the eccentric member in a first eccentricity of the first eccentric axis with respect to the drive shaft axis and, in a second detent position on the eccentric member, positions the eccentric member in a second eccentricity of the first eccentric axis, which is greater than the first eccentricity, with respect to the drive shaft axis, wherein the coupling member is moved in a reciprocating manner between the first and second detent position preferably by means of a reversal of the direction of rotation of the blade drive shaft.

3. Distributor device as claimed in claim 2,
**characterised in that** the coupling member engages positively into a recess of the first eccentric member, wherein the coupling member preferably comprises a cam which engages into the recess of the first eccentric member, and the recess provides a first detent position for the cam in a first direction of rotation of the blade drive shaft and provides a second detent position in a direction of rotation of the blade drive shaft opposite to the first direction of rotation.

4. Distributor device as claimed in any one of the preceding claims 2-3,
**characterised in that** the coupling member and the drive shaft are designed integrally.

5. Distributor device as claimed in any one of the preceding claims,
**characterised in that** a second perforated blade disk with a plurality of outlet openings delimits the interior space of the distributor chamber and a second cutting blade is provided which has a cutting edge which lies against the second perforated blade disk and is moveable relative thereto, wherein the second cutting blade is preferably connected to the first eccentric member and the cutting edge of the second eccentric member can be moved by means of the first eccentric member relative to the second perforated blade disk.

6. Distributor device as claimed in claim 5,
**characterised in that** the first and/or second cutting blade are mounted on the first eccentric member so as to be able to rotate about the first eccentric axis.

7. Distributor device as claimed in any one of the preceding claims,
**characterised in that** the inlet opening defines an inlet direction of the solids-containing liquid which is in parallel with, preferably coaxial to, the drive shaft axis, wherein a liquid controlling device is arranged preferably in the chamber interior space and is formed such that the axially inflowing liquid is deflected radially outwards thereon.

8. Distributor device as claimed in any one of the preceding claims,
**characterised by** a flow channel located upstream of the inlet opening in the chamber interior space in the direction of flow and a nozzle arranged in this flow channel, which nozzle has a cross-sectional decrease, followed by a cross-sectional increase in the direction of flow.

9. Distributor device as claimed in claim 5,
**characterised in that** the second cutting blade is connected to a second eccentric member, wherein preferably the second eccentric member is connected to the blade drive shaft and defines a second eccentric axis which is located at a distance from the drive shaft axis and preferably does not extend coaxially to the first eccentric shaft.

10. Distributor device as claimed in claim 9,
**characterised in that** the second cutting blade is mounted on the second eccentric element so as to be able to rotate about the second eccentric axis.

11. Distributor device as claimed in claims 2 and 5 and any one of claims 6-10,
**characterised in that** the coupling member engages into a recess of the second eccentric member and, in a first detent position on the second eccentric member, the second eccentric member is positioned in a first eccentricity of the second eccentric axis with respect to the drive shaft axis and, in a second detent position on the second eccentric member, the second eccentric member is positioned in a second eccentricity of the second eccentric axis, which is greater than the first eccentricity, with respect to the drive shaft axis.

12. Distributor device as claimed in any one of claims 9-11,
**characterised in that** the second eccentric axis around the drive shaft axis is offset with respect to the first eccentric axis, preferably offset by 180° about the drive shaft axis.

13. Distributor device as claimed in claims 3 and 5 and any one of claims 6-12,
**characterised in that** the or a second cam engages into the recess of the first eccentric member, and the recess provides a first detent position for the cam in a first direction of rotation of the blade drive shaft and provides a second detent position in a direction of rotation of the blade drive shaft opposite to the first direction of rotation.

14. Distributor device as claimed in any one of the preceding claims,
**characterised in that** the first and/or the second cutting blade is annular and has at least one circumferential cutting edge which lies against the first and second perforated blade disk, and circumferential cutting edges are preferably formed on an inner edge and on an outer edge of the first or second cutting blade.

15. Distributor device as claimed in any one of the preceding claims,
**characterised in that**
- a ventilation opening is present in the perforated blade disk and issues into a space described by the cutting edge, in particular the inner cutting edge of the cutting blade,
- the distance between the first/second eccentric axis from the drive shaft axis and the diameter of the cutting edge, in particular the outer cutting edge, is selected such that the cutting edge or the outer cutting edge moves on an eccentric path which encompasses a surface into which the ventilation opening issues,
- wherein the distance between the inner edge and the outer edge of the first and/or second cutting blade is preferably less than or equal to the diameter of the outlet openings in the perforated blade disk.

16. Distributor device as claimed in claim 3 or claim 13,
**characterised in that** the recess has a rounded-off, L-shaped geometry and the cam lies against a first limb of the recess in the first detent position and against a second limb of the recess in the second detent position.

## Revendications

1. Dispositif de répartition pour liquides contenant des matières solides, comprenant :
- une chambre de répartition avec un orifice d'admission qui débouche sur un intérieur de chambre de la chambre de répartition,
- un premier disque à lames perforé avec plusieurs orifices de sortie qui relient l'intérieur de chambre à plusieurs manchons de raccordement,
- un arbre d'entraînement de lame qui est monté pivotant autour d'un axe d'arbre d'entraînement,
- un premier élément excentrique qui est relié à l'arbre d'entraînement de lame et définit un premier axe excentrique espacé de l'axe d'arbre d'entraînement, et
- une première lame de coupe qui est reliée au premier élément excentrique et présente un bord tranchant qui est placé contre le premier disque à lames perforé et est déplaçable par rapport au premier disque à lames perforé au moyen du premier élément excentrique,
- **caractérisé en ce qu'**un élément de contrepoids est relié à l'arbre d'entraînement de lame, dont le centre de masse est disposé de manière excentrée par rapport à l'axe d'arbre d'entraînement, de préférence décalé de 180° par rapport au premier axe d'arbre excentrique.

2. Dispositif de répartition selon la revendication 1, **caractérisé par** un élément de couplage qui relie l'élément excentrique à l'arbre d'entraînement de lame et qui, dans une première position d'enclenchement au niveau de l'élément excentrique, positionne l'élément excentrique dans une première excentricité du premier axe excentrique par rapport à l'axe d'arbre d'entraînement et, dans une seconde position d'enclenchement au niveau de l'élément excentrique, positionne l'élément excentrique par rapport à l'axe d'arbre d'entraînement dans une seconde excentricité du premier axe excentrique qui est supérieure à la première excentricité, l'élément de couplage étant de préférence déplacé selon un mouvement de va-et-vient entre la première et la seconde position d'enclenchement au moyen d'une inversion du sens de rotation de l'arbre d'entraînement de lame.

3. Dispositif de répartition selon la revendication 2, **caractérisé en ce que** l'élément de couplage entre en prise par assemblage de formes dans un évidement du premier élément excentrique, l'élément de couplage comprenant de préférence une came qui entre en prise dans l'évidement du premier élément excentrique et l'évidement, dans un premier sens de rotation de l'arbre d'entraînement de lame, fournissant pour la came une première position d'enclenchement et, dans un sens de rotation de l'arbre d'entraînement de lame opposé au premier sens de rotation, fournissant une seconde position d'enclenchement.

4. Dispositif de répartition selon l'une des revendications précédentes 2 et 3, **caractérisé en ce que** l'élément de couplage et l'arbre d'entraînement sont réalisés d'une seule pièce.

5. Dispositif de répartition selon l'une des revendications précédentes, **caractérisé en ce qu'**un second disque à lames perforé avec plusieurs orifices de sortie limite l'intérieur de la chambre de répartition et **en ce qu'**est fournie une seconde lame de coupe qui présente un bord tranchant qui est placé contre le second disque à lames perforé et est déplaçable par rapport à celui-ci, la seconde lame de coupe étant reliée de préférence au premier élément excentrique et le bord tranchant du second élément excentrique étant déplaçable par rapport au second disque à lames perforé au moyen du premier élément excentrique.

6. Dispositif de répartition selon la revendication 5, **caractérisé en ce que** la première et/ou la seconde lame de coupe contre le premier élément excentrique est montée pivotante autour du premier axe excentrique.

7. Dispositif de répartition selon l'une des revendications précédentes, **caractérisé en ce que** l'orifice d'admission définit une direction d'admission du liquide contenant des matières solides, qui est parallèle, de préférence coaxiale à l'axe d'arbre d'entraînement, un dispositif de guidage de liquide étant de préférence disposé à l'intérieur de la chambre, formé de telle sorte que le liquide qui afflue axialement est dévié radialement vers l'extérieur à ce niveau.

8. Dispositif de répartition selon l'une des revendications précédentes, **caractérisé par** un canal d'écoulement situé en amont de l'orifice d'admission dans l'intérieur de chambre dans la direction d'écoulement et par une buse disposée dans ce canal d'écoulement avec une réduction de section, suivie d'un élargissement de section dans la direction d'écoulement.

9. Dispositif de répartition selon la revendication 5, **caractérisé en ce que** la seconde lame de coupe est reliée à un second élément excentrique, le second élément excentrique étant de préférence relié à l'arbre d'entraînement de lame et définissant un second axe excentrique espacé de l'axe d'arbre d'entraînement, qui s'étend de préférence de manière non coaxiale au premier arbre excentrique.

10. Dispositif de répartition selon la revendication 9, **caractérisé en ce que** la seconde lame de coupe contre le second élément excentrique est montée pivotante autour du second axe excentrique.

11. Dispositif de répartition selon les revendications 2 et 5 et l'une des revendications 6 à 10, **caractérisé en ce que** l'élément de couplage entre en prise dans un évidement du second élément excentrique et, dans une première position d'enclenchement au niveau du second élément excentrique, positionne le second élément excentrique dans une première excentricité du second axe excentrique par rapport à l'axe d'arbre d'entraînement et, dans une seconde position d'enclenchement au niveau du second élément excentrique, positionne le second élément excentrique par rapport à l'axe d'arbre d'entraînement dans une seconde excentricité du second axe excentrique qui est supérieure à la première excentricité.

12. Dispositif de répartition selon l'une des revendications 9 à 11, **caractérisé en ce que** le second axe excentrique autour de l'axe d'arbre d'entraînement est décalé par rapport au premier axe excentrique, de préférence décalé de 180° autour de l'axe d'arbre d'entraînement.

13. Dispositif de répartition selon les revendications 3 et 5 et l'une des revendications 6 à 12, **caractérisé en ce que** la came ou une seconde came entre en prise dans l'évidement du second élément excentrique et l'évidement, dans un premier sens de rotation de l'arbre d'entraînement de lame, fournit une première position d'enclenchement pour la came et, dans un sens de rotation de l'arbre d'entraînement de lame opposé au premier sens de rotation, fournit une seconde position d'enclenchement.

14. Dispositif de répartition selon l'une des revendications précédentes, **caractérisé en ce que** la première et/ou la seconde lame de coupe est circulaire et présente au moins un bord tranchant périphérique qui est placé contre le premier ou le second disque à lames perforé, des bords tranchants périphériques étant de préférence formés contre un bord intérieur et contre un bord extérieur de la première ou de la seconde lame de coupe.

15. Dispositif de répartition selon l'une des revendications précédentes, **caractérisé en ce que** :
- le disque à lames perforé présente un orifice d'aération qui débouche dans un espace circonscrit par le bord tranchant, en particulier le bord tranchant intérieur de la lame de coupe,
- l'espace entre le premier/second axe excentrique par rapport à l'axe d'arbre d'entraînement et le diamètre du bord tranchant, en particulier le bord tranchant extérieur, est choisi de telle sorte que le bord tranchant ou le bord tranchant extérieur se déplace sur une trajectoire excentrée qui entoure une surface dans laquelle débouche l'orifice d'aération,
- l'espace entre le bord intérieur et extérieur de la première et/ou de la seconde lame de coupe étant de préférence inférieur ou égal au diamètre des orifices de sortie dans le disque à lames perforé.

16. Dispositif de répartition selon la revendication 3 ou la revendication 13, **caractérisé en ce que** l'évidement présente une géométrie arrondie en forme de L et la came, dans la première position d'enclenchement, est placée contre une première branche de l'évidement et, dans la seconde position d'enclenchement, contre une seconde branche de l'évidement.
